# EUROPÄISCHE PATENTSCHRIFT

(11) **EP 3 346 846 B1**
(45) Veröffentlichungstag und Bekanntmachung des Hinweises auf die Patenterteilung: **22.05.2019**
(21) Anmeldenummer: 16760084.0
(22) Anmeldetag: 02.09.2016
(51) Int. Cl.: A21C 5/04

(54) **TEIGBEARBEITUNGSMASCHINE**
DOUGH PROCESSING MACHINE
DIVISEUSE DE BOULANGERIE

(30) Priorität: 08.09.2015 DE 102015217120
(43) Veröffentlichungstag der Anmeldung: 18.07.2018
(73) Patentinhaber: WP Kemper GmbH, 33397 Rietberg (DE)
(72) Erfinder: LAZIS, Jan, 33605 Bielefeld (DE)
(74) Vertreter: Rau, Schneck & Hübner Patentanwälte Rechtsanwälte PartGmbB
(86) Internationale Anmeldenummer: PCT/EP2016/070772
(87) Internationale Veröffentlichungsnummer: WO 2017/042107

(56) Entgegenhaltungen:
- EP-A2- 2 689 663
- WO-A1-90/11689

## Beschreibung

Die Erfindung betrifft eine Teigbearbeitungsmaschine, insbesondere zum Produzieren gewirkter Teiglinge aus einem Rohteig.

Eine derartige Teigbearbeitungsmaschine ist beispielsweise bekannt aus der DE 10 2012 216 076 A1. Die DE 10 2014 201 518 A1 offenbart eine Teigteilmaschine. Die DE 24 38 316 A1 offenbart eine Maschine zum Teilen und Wirken von Teigstücken. Die EP 2 689 663 A2 offenbart eine Portionier- und Wirkeinrichtung mit auswechselbarem Portioniersegment. Die WO 90/11689 A1 offenbart eine Vorrichtung zum Portionieren von Teig.

Es ist die Aufgabe der Erfindung, eine Teigbearbeitungsmaschine der eingangs genannten Art derart weiterzubilden, dass eine Reinigung der Teigdosiereinrichtung erleichtert ist. Zusätzlich ist eine Teigdosiereinrichtung der Teigbearbeitungsmaschine so weiterzubilden, dass unerwünschte Teig-Restabfälle weitgehend oder gänzlich vermieden sind.

Diese Aufgabe ist erfindungsgemäß gelöst durch eine Teigbearbeitungsmaschine mit den im Anspruch 1 angegebenen Merkmalen.

Erfindungsgemäß wurde erkannt, dass eine Gestaltung einer verlagerbaren Kulissenführung für die Messkolben in der Messtrommel der Teigdosiereinrichtung die Möglichkeit schafft, die Messkolben und die Messkolbenleisten mit geringem Aufwand und insbesondere ohne Einsatz von Werkzeugen aus der Messtrommel zu entnehmen. Dies macht diese Komponenten einer einfachen Reinigung zugänglich.

Eine Kulissenführung nach Anspruch 2, bei der die Kulisse über die Messkolbenleiste mit den hiervon getragenen Messkolben zusammenwirkt, hat sich bewährt.

Eine Ausgestaltung nach Anspruch 3 ermöglicht eine baugruppenweise Entnahme von Komponenten aus der Messtrommel, was deren Demontage zur Reinigung weiter vereinfacht.

Eine Unterteilung der Kulissen-Tragplatte nach Anspruch 4 erhöht die Freiheitsgrade zur Erreichung des Ziels einer Zugänglichmachung des Inneren der Messtrommel zur Entnahme der Messkolbenleisten. Mindestens einer der Kulissen-Tragplattenabschnitte kann zwischen einer Betriebsstellung und einer Reinigungsstellung verlagerbar ausgeführt sein.

Zwei Kulissen-Tragplatten nach Anspruch 5 führen zu einer vorteilhaft symmetrischen Gestaltung einer Führung der Messkolben zwischen deren Messstellung und deren Übergabestellung.

Entsprechendes gilt für eine Verlagerbarkeit nach Anspruch 6.

Eine Teigdosiereinrichtung der Teigbearbeitungsmaschine ist gemäß einem weiteren Aspekt so weitergebildet, dass unerwünschte Teig-Restabfälle weitgehend oder gänzlich vermieden sind. Die Teigdosiereinrichtung der Teigbearbeitungsmaschine weist auf eine Teig-Zuführeinheit, einen Teig-Zuführkolben, eine Teigkammer und eine Messtrommel mit einer Mehrzahl von Messkammern. Die Teigbearbeitungsmaschine mit dieser Teigdosiereinrichtung hat weiterhin ein Gehäuse und ein zwischen der Teigkammer und der Messtrommel angeordnetes Mundstück, über das in einer Betriebsstellung Teig von der Teigkammer hin zu den Messkammern der Messtrommel gefördert wird. Das Mundstück ist aus Kunststoff gefertigt.

Bei einer erfindungsgemäßen Teigbearbeitungsmaschine nach Anspruch 7 wurde erkannt, dass ein aus Kunststoff gefertigtes Mundstück die Möglichkeit einer spielfreien Anlage des Mundstücks an einer äußeren Mantelwand der Messtrommel bietet. Ein unerwünschter lateraler Teigaustritt zwischen Mundstück und Messtrommel einerseits und zwischen Mundstück und Teigkammer andererseits kann aufgrund der Kunststoffausführung des Mundstücks weitestgehend oder gänzlich vermieden werden. Das Mundstück kann einstückig ausgeführt sein. Alternativ kann das Mundstück mehrstückig ausgeführt und insbesondere aus verschiedenen Kunststoffmaterialien ausgeführt sein.

Eine Ausgestaltung des Mundstücks nach Anspruch 8 führt zu einem einerseits lebensmittelverträglichen und andererseits gut reinigbaren Mundstück.

Eine Verlagerbarkeit des Mundstücks nach Anspruch 9 verbessert dessen Zugänglichkeit und erleichtert damit dessen Reinigung.

Eine Schwenklagerung nach Anspruch 10 stellt eine einfache geführte Verlagerung des Mundstücks zwischen der Betriebsstellung und der Reinigungsstellung sicher.

Bei Einsatz eines verlagerbaren bzw. schwenkverlagerbaren Mundstücks lässt sich insbesondere eine einfache Blockung einzelner Bearbeitungsreihen der Teigbearbeitungsmaschine durch Einsetzen entsprechender Blockungskörper in zugehörige Aufnahmen am Ort von Teigdurchtrittskanälen des Mundstücks erreichen. Derartige Blockungskörper ermöglichen es, eine N-reihig ausgeführte Teigbearbeitungsmaschine durch Einsatz von mindestens einem Blockungskörper oder einer Mehrzahl M von Blockungskörpern in eine N-1 -reihige oder N-M-reihige Teigbearbeitungsmaschine ohne größeren Aufwand umzugestalten. Die Blockungskörper ermöglichen eine einfache Blockung einzelner Bearbeitungsreihen. Es kann mindestens eine randseitige Bearbeitungsreihe oder auch eine mittlere zwischen nicht geblockten Bearbeitungsreihen angeordnete Bearbeitungsreihe geblockt werden. Der mindestens eine Blockungskörper kann in das Mundstück in einen Teigdurchtrittskanal eingesetzt werden und entsprechend zu einer Aufnahme im Mundstück komplementär gestaltet sein. Der Einsatz derartiger Blockungskörper ist im Falle eines abklappbar gestalteten Mundstücks von besonderem Vorteil. Von Vorteil ist, wenn der mindestens eine Blockungsköper so eingesetzt ist, dass der Druck des geförderten Teigs den Blockungskörper in seine Aufnahme presst.

Die Merkmale der beiden vorstehend erläuterten Aspekte können beliebig miteinander kombiniert werden. Insbesondere ist es möglich, die Kunststoffausführung des Mundstücks mit der verlagerbaren Kulissenführungsgestaltung zu kombinieren.

Ausführungsbeispiele der Erfindung werden nachfolgend anhand der Zeichnung näher erläutert. In dieser zeigen:
- Fig. 1: perspektivisch eine innere Details preisgebende Ansicht einer Teigbearbeitungsmaschine, die eine Mehrzahl angetriebener Teig-Bearbeitungskomponenten aufweist;
- Fig. 2: perspektivisch und im Vergleich zur Fig. 1 vergrößert eine Teigportioniereinrichtung der Teigbearbeitungsmaschine, die zur Vorbereitung einer nachfolgenden Teigbearbeitung in der Teigbearbeitungsmaschine dient;
- Fig. 3: eine Seitenansicht der Teigportioniereinrichtung aus Blickrichtung III in Fig. 2;
- Fig. 4: einen Schnitt gemäß Linie IV-IV in Fig. 3;
- Fig. 5: perspektivisch eine zentrale Montageplatte, gesehen von einem Teig-Bearbeitungsraum her einschließlich von der Montageplatte getragener Komponenten einer der Teigportioniereinrichtung nachgeordneten Teigdosiereinrichtung der Teigbearbeitungsmaschine;
- Fig. 6: in einer zur Fig. 5 ähnlichen Ansicht die gleichen Komponenten, abgesehen von einem entfernten Teig-Zuführkolben der Teigdosiereinrichtung;
- Fig. 7: in einer zu den Fig. 5 und 6 ähnlichen Darstellung die Komponenten nach Fig. 6, wobei zwei Kulissen-Tragplatten einer Kulissenführung zur Führung einer Verlagerung von Messkolben einer Messtrommel der Teigdosiereinrichtung aus einer Kulissenführungs-Betriebsstellung nach Fig. 6 in eine Kulissenführungs-Reinigungsstellung überführt sind;
- Fig. 8: in einer zu den Fig. 5 bis 7 ähnlichen Darstellung die Komponenten nach den Fig. 6 und 7, wobei eine Teigkammer der Teigdosiereinrichtung aus einer Betriebsstellung nach den Fig. 5 bis 7 in eine Reinigungsstellung ausgeschwenkt ist;
- Fig. 9: in einer zur Fig. 8 ähnlichen Darstellung die Komponenten nach den Fig. 6 bis 8, wobei ein Einlauftrichter der Teigdosiereinrichtung entfernt und ein Mundstück der Teigdosiereinrichtung von der Teigkammer abgeklappt ist;
- Fig. 10: in einer zu den Fig. 5 bis 9 ähnlichen Darstellung die Komponentenbaugruppe mit im Vergleich zur Fig. 9 entfernter Teigkammer einschließlich Mundstück sowie mit aus der Messtrommel herausgenommenen Messkolbenleisten einschließlich von diesen getragener Messkolben;
- Fig. 11: perspektivisch die Teigkammer der Teigdosiereinrichtung;
- Fig. 12: perspektivisch das Mundstück;
- Fig. 13: perspektivisch einen Abschnitt einer der Messkolbenleisten;
- Fig. 14: in einer zur Fig. 4 ähnlichen Darstellung eine weitere Ausführung einer Teigportioniereinrichtung;
- Fig. 15: in einer zu Fig. 12 ähnlichen Ansicht das Mundstück mit zwei eingesetzten Blockungskörpern, die zwei der insgesamt sechs Bearbeitungsreihen der Teigdosiereinrichtung blocken; und
- Fig. 16: das Mundstück nach Fig. 15, gesehen aus Blickrichtung XVI in Fig. 15.

Eine Teigbearbeitungsmaschine 1 dient zur Herstellung einer Mehrzahl exakt dosierter und rundgewirkter Teiglinge, die beispielsweise nachfolgend zu Brötchen verarbeitet werden können. Die Teigbearbeitungsmaschine 1 ist sechsreihig ausgeführt.

Die Teigbearbeitungsmaschine 1 hat ein im Wesentlichen quaderförmiges Gehäuse 2 mit einem Gehäuserahmen 3. Ein Gehäuseboden 4 hat oberhalb eines Maschinenbodens eine erhebliche Bodenfreiheit im Bereich einiger zehn Zentimeter.

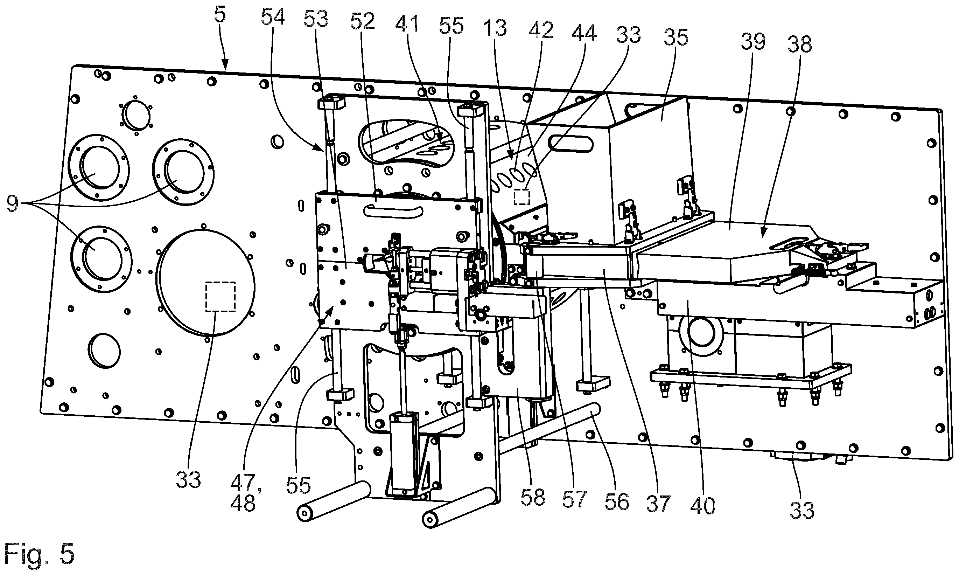

Die Teigbearbeitungsmaschine 1 hat eine Mehrzahl angetriebener Teig-Bearbeitungskomponenten, die nachfolgend noch beschrieben werden. Weiterhin hat die Teigbearbeitungsmaschine 1 eine Mehrzahl von Antrieben, die mit diesen Teig-Bearbeitungskomponenten in mechanischer Antriebsverbindung stehen und die nachfolgend ebenfalls noch beschrieben werden. Eine zentrale Montageplatte 5, die insbesondere in den Fig. 5 bis 10 dargestellt ist, trägt einerseits, also zur einen Seite der Platte hin, die Teig-Bearbeitungskomponenten, also diejenigen Komponenten, die mit dem Teig in Berührung stehen, und andererseits, also zur anderen Plattenseite hin, die Antriebe für diese Teig-Bearbeitungskomponenten.

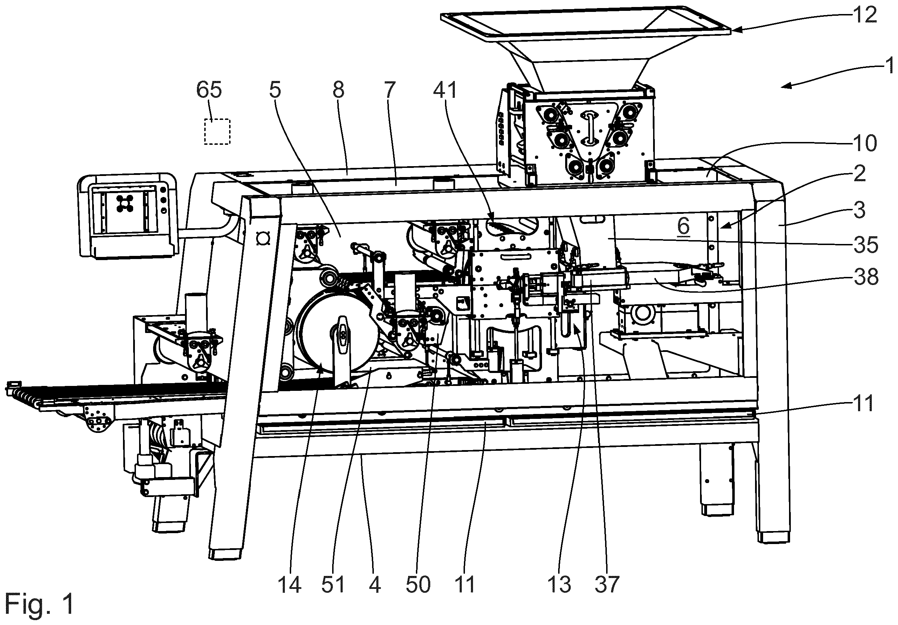

Die Montageplatte 5 ist so angeordnet, dass sie einen Innenraum 6 des Gehäuses 2 unterteilt in einen Teig-Bearbeitungsraum 7, in dem die Teig-Bearbeitungskomponenten untergebracht sind, und in einen Antriebsraum 8, in dem die Antriebe untergebracht sind. Antriebsverbindungen zwischen dem Teig-Bearbeitungsraum 7, der in den Fig. 1 sowie 5 bis 10 dem Betrachter zugewandt ist, und dem Antriebsraum 8 verlaufen durch Durchtrittsöffnungen 9 (vgl. z. B. Fig. 5) in der Montageplatte 5.

Auf dem Gehäuseboden 4 liegen insgesamt vier Auffangwannen 11 auf, von denen in der Fig. 1 zwei Auffangwannen 11 randseitig sichtbar sind. Die vier Auffangwannen 11 sind miteinander lösbar verbunden. Die Auffangwannen 11 sind von der Seite des Teig-Bearbeitungsraums 7 her von außen her zugänglich und können zur Entleerung aus dem Gehäuse 2 entnommen werden. Die Auffangwannen 11 dienen zum Auffangen von Teigresten, die bei der Teigbearbeitung im Teig-Bearbeitungsraum 7 anfallen.

Die Teigbearbeitungsmaschine 1 hat folgende Teig-Bearbeitungskomponenten:
- eine Teigportioniereinrichtung 12 zur Portionierung von Teig für eine nachfolgende Teigbearbeitung. Die Teigportioniereinrichtung 12 wird auch als Vorportionierer bezeichnet.
- eine Teigdosiereinrichtung 13 (vgl. auch Fig. 5) zur Vorgabe jeweils eines genau dosierten Volumens der Teiglinge.
- eine Teigwirkeinrichtung 14 zum Rundwirken der dosierten Teiglinge.

Die Montageplatte 5 ist vertikal stehend im Gehäuse 2 zwischen dem Gehäuseboden 4 und einem oberen Gehäusedeckel 10 angeordnet. Die tragenden Verbindungen der Teig-Bearbeitungskomponenten 13 und 14 einerseits und der zugeordneten Antriebe andererseits an der Montageplatte 5 sind in Balkonbauweise ausgeführt.

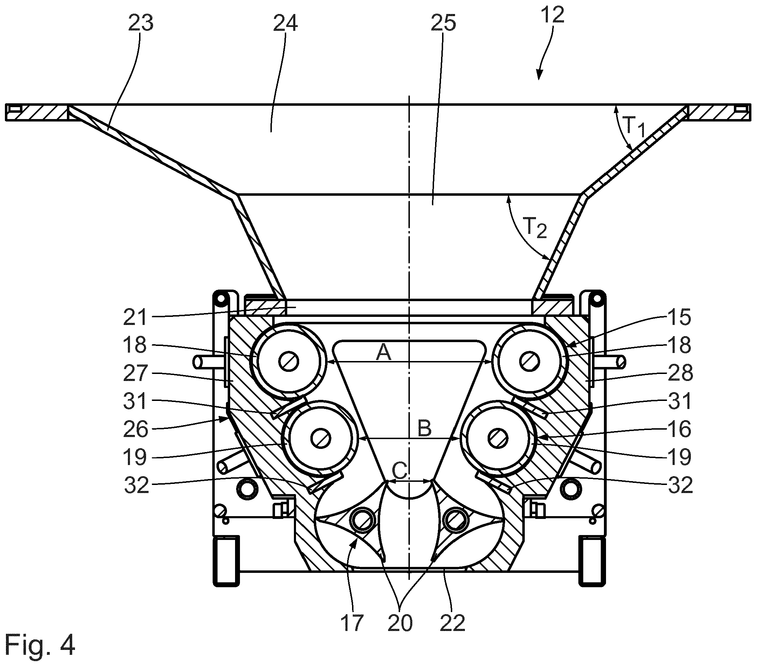

Die Teigportioniereinrichtung 12 hat eine Mehrzahl von Walzenpaaren, im dargestellten Ausführungsbeispiel genau drei Walzenpaare 15, 16 und 17 mit jeweils zwei Walzen 18, 19 und 20. Zwischen den jeweils um eine horizontale Drehachse antreibbaren Walzen 18, 19, 20 jedes Walzenpaares 15, 16, 17 ist jeweils ein horizontal verlaufender Teig-Förderspalt A, B und C angeordnet (vgl. Fig. 4). Hierbei gilt: A > B > C.

Die Walzenpaare 15 bis 17 sind zum Fördern des Teigs zwischen einer oberen Teig-Zugabeöffnung 21 und einer unteren Teig-Abgabeöffnung 22 ausgebildet. Auf die obere Teig-Zugabeöffnung 21 aufgesetzt ist ein Teig-Zugabetrichter 23. Dieser hat einen oberen Zugabeabschnitt 24 mit erstem Trichterwinkel T₁ und einen sich hieran anschließenden unteren Zugabeabschnitt 25 mit zweitem Trichterwinkel T₂. Es gilt: T₂ > T₁. Der untere Zugabeabschnitt 25 hat also steiler verlaufende Trichterwände als der obere Zugabeabschnitt 24.

Die Walzenpaare 15 bis 17 sind von einem Gehäuse 26 der Teigportioniereinrichtung 12 aufgenommen. Das Gehäuse 26 ist so ausgeführt, dass die Komponenten der Teigportioniereinrichtung 12 zwischen der Teig-Zugabeöffnung 21 und der Teig-Abgabeöffnung 22 umschlossen sind.

Damit die Walzen 18 bis 20 den Teig zur Förderung hin zur Teig-Abgabeöffnung 22 gut mitnehmen können, sind Oberflächen der Walzenmäntel der Walzen 18 bis 20 entsprechend bearbeitet, zum Beispiel glasperlgestrahlt.

Das Gehäuse 26 ist insgesamt aus Kunststoff ausgeführt, nämlich aus dem Polymermaterial POM (Polyoxymethylen).

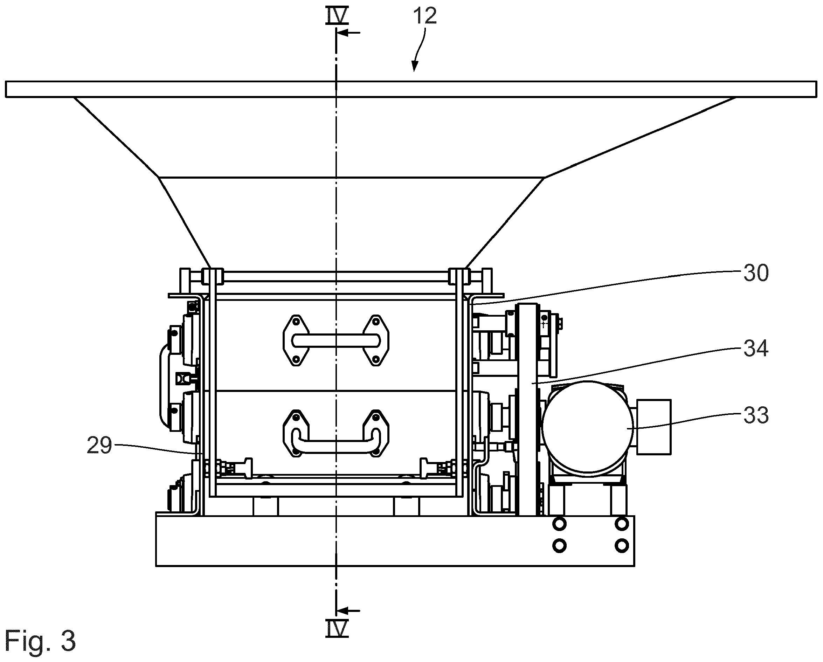

Das Gehäuse 26 ist mehrteilig ausgeführt und hat zwei Gehäuse-Seitenteile 27, 28 aus POM und zwei gegenüberliegende Gehäuse-Stirnwände 29, 30 (vgl. Fig. 3), in denen die Walzen 18, 19, 20 endseitig gelagert sind. Die Gehäuse-Stirnwände 29, 30 sind aus POM.

Die Gehäuse-Seitenteile 27, 28 sind jeweils einstückig ausgeführt. Die Gehäuse-Seitenteile 27, 28 haben jeweils drei hohlzylindrische Ausnehmungen, die komplementär zu den hierin laufenden Mantelwandabschnitten der Walzen 18 bis 20 mit größtem Radius zur jeweiligen Walzen-Drehwalze ausgeführt sind.

Die Gehäuse-Seitenteile 27, 28 haben jeweils zwei Aufnahmen für Teigschaber 31, 32. Die beiden oberen Teigschaber 31, die in die zugehörigen Aufnahmen der beiden Gehäuse-Seitenteile 27, 28 eingesetzt sind, wirken mit den Walzen 18 des obersten Walzenpaars 15 zusammen. Die Aufnahmen für die beiden oberen Teigschaber 31 sind in den GehäuseSeitenteilen 27, 28 zwischen den Walzen 18, 19 der Walzenpaare 15, 16 angeordnet. Die beiden weiteren, unteren Teigschaber 32 sind in den Gehäuse-Seitenteilen 27, 28 zwischen den Walzen 19, 20 der Walzenpaare 16, 17 angeordnet und wirken mit den Walzen 19 des mittleren Walzenpaars 16 zusammen.

Alle Walzen 18 bis 20 der Walzenpaare 15 bis 17 sind über einen gemeinsamen Antriebsmotor 33 angetrieben. Als Übertragungsglied dieses gemeinsamen Antriebs dient ein Zahnriemen 34. Über jeweils den Walzen 18 bis 20 zugeordnete Getriebe können den Walzen 18 bis 20 der verschiedenen Walzenpaare 15 bis 17 verschiedene Umdrehungsgeschwindigkeiten vorgegeben werden. Ziel hierbei ist die Erreichung eines möglichst kontinuierlichen Teigflusses. Die Umdrehungsgeschwindigkeit der Walzen 20 des untersten Walzenpaars 17 ist dabei höher als die Umdrehungsgeschwindigkeit der Walzen 19 des mittleren Walzenpaars 16, die wiederum höher ist als die Umdrehungsgeschwindigkeit der Walzen 18 des obersten Walzenpaars 15.

Der Antriebsmotor 33 ist oberhalb des Antriebsraums 8 angeordnet, also ebenfalls auf der antriebsseitigen Seite der Montageplatte 5.

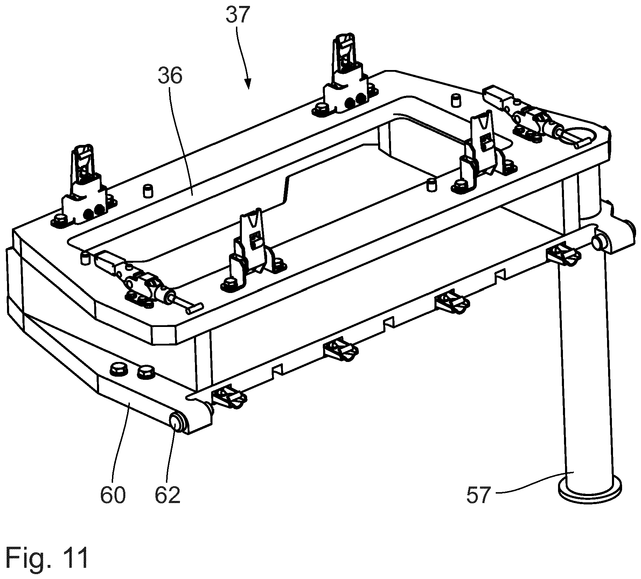

Das unterste Walzenpaar 17 ist mit zwei jeweils dreiflügligen Sternwalzen 20 ausgeführt. Die Sternwalzen 20 erzeugen vorportionierte Teigstücke, die der nachfolgenden Teigdosiereinrichtung 13 zugeführt werden. Die vorportionierten Teigstücke fallen durch die Teig-Abgabeöffnung 22 in einen darunter liegenden Einlauftrichter 35 der Teigdosiereinrichtung 13. Von dort fallen sie durch eine obere Kammeröffnung 36 (vgl. Fig. 11) in eine Teigkammer 37.

Der Einlauftrichter 35 stellt eine Teig-Zuführeinheit der Teigdosiereinrichtung 13 dar.

Zur Teigdosiereinrichtung 13 gehört weiterhin ein Teig-Zuführkolben 38 mit einem quaderförmigen Kolbenabschnitt 39. Der Kolbenabschnitt 39 ist komplementär zur Teigkammer 37 ausgeführt. Der Teig-Zuführkolben 38 wird über eine Linearführung 40 längs seines horizontalen Kolbenhubs geführt. Angetrieben ist der Teig-Zuführkolben über einen Servoantrieb, der im Antriebsraum 8 des Gehäuses 2 angeordnet ist.

Der Teig-Zuführkolben 38 ist in der Fig. 5 in einer maximal zurückgezogenen Kolbenposition dargestellt, die eine Reinigungsposition des Teig-Zuführkolbens 38 darstellt.

Weiterhin hat die Teigdosiereinrichtung 13 eine Messtrommel 41 mit einer Mehrzahl von Messkammern 42.

Entsprechend der sechsreihigen Ausführung der Teigbearbeitungsmaschine 1 hat die Messtrommel 41 in Umfangsrichtung gleich verteilt insgesamt acht Kammersätze zu je sechs nebeneinander liegenden Messkammern 42. Ein Antrieb der Messtrommel 41 um deren zentrale, horizontale Trommelachse erfolgt über einen Messtrommel-Antriebsmotor, der im Antriebsraum 8 untergebracht ist.

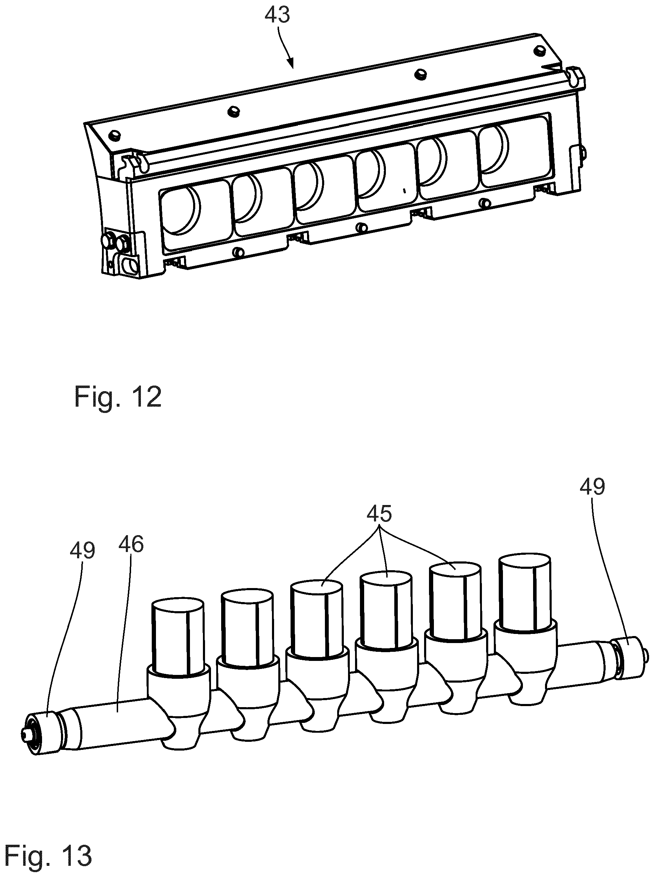

Im Teigförderweg zwischen der Teigkammer 37 und der Messtrommel 41 ist ein Mundstück 43 (vgl. auch Fig. 12) angeordnet. Ein Grundkörper 43a des Mundstücks 43, in dem sechs Teigdurchtrittskanäle aufgeführt sind, ist aus PETP (Polyethylenterephthalat) gefertigt. Ein auf dem Grundkörper 43a aufgesetzter Anlagekörper 43b des Mundstücks 43 ist aus einem anderen Kunststoff, nämlich aus PTFE (Polytetrafluorethylen) gefertigt. Das Mundstück 43 liegt im Bereich des Anlagekörpers 43b spielfrei an einer äußeren Mantelwand 44 der Messtrommel 41 an. Ein unerwünschter lateraler Teigaustritt zwischen dem Mundstück 43 und der Messtrommel 41 bzw. zwischen dem Mundstück 43 und der Teigkammer 37 ist hierdurch vermieden. Das Mundstück 43 kann als Teil der Teigkammer 37 verstanden werden.

Zur Teigdosiereinrichtung 13 gehört weiterhin eine Mehrzahl von Messkolben 45. Kolbenabschnitte der Messkolben 45 sind einteilig aus Kunststoff. Jeweils genau einer der Messkolben 45 ist genau einer der Messkammern 42 zur Vorgabe eines Messkammervolumens für die Teigdosierung zugeordnet. Jeweils sechs nebeneinander liegende Messkolben 45 bilden einen Messkolbensatz, der einem der Kammersätze der Messkammern 42 zugeordnet ist. Die sechs Messkolben 45 jedes Kolbensatzes werden von einer Messkolbenleiste 46 (vgl. auch Fig. 13) getragen, die radial innerhalb der Messtrommel 41 angeordnet sind.

Die Messkolben 45 sind gesteuert verlagerbar zwischen einer zurückgezogenen Messstellung, in der die Messkolben 45 das Messkolbenvolumen zur Teigdosierung vorgeben, und einer radial ausgefahrenen Übergabestellung zur Übergabe des im Messkolbenvolumen dosierten Teigvolumens an die nachgeordnete Teig-Bearbeitungskomponente, nämlich an die Teigwirkeinrichtung 14. Zu dieser gesteuerten Verlagerung der Messkolben 45 dient eine Kulissenführung 47 mit in der Zeichnung nicht sichtbaren Kurvensegmenten, die an Kulissen-Tragplatten 48 montiert sind und die auch als Kulissenelemente bezeichnet sind.

Eine dieser beiden Kulissen-Tragplatten 48 ist in den Figuren 1 sowie 5 bis 10 dem Betrachter zugewandt und zwischen der Messtrommel 41 und dem Betrachter angeordnet. Die Kulissenabschnitte dieser sichtbaren Kulissen-Tragplatte 48 sind an der dem Betrachter abgewandten Seite der Kulissen-Tragplatte angeordnet. Die andere, nicht sichtbare Kulissen-Tragplatte 48 ist im Bereich der Montageplatte 5 an der dem Betrachter abgewandten Stirnseite der Messtrommel 41 angeordnet und hat eine Anordnung von Kulissenabschnitten, die zur Anordnung der Kulissenabschnitte bei der sichtbaren Kulissen-Tragplatte 48 spiegelsymmetrisch ist. Die Kulissenabschnitte der Kulissen-Tragplatten 48 wirken mit endseitigen Laufrollen 49 (vgl. Fig. 13) der Messkolbenleisten 46 zusammen.

Zwischen einer in der Fig. 1 links dargestellten Übergabeseite der Messtrommel 41 und der Teigwirkeinrichtung 14 ist dem Teigförderweg der Teigbearbeitungsmaschine 1 eine Übergabeeinheit 50 angeordnet.

Ein Antrieb der Übergabeeinheit 50 erfolgt über mindestens einen Antriebsmotor, der im Antriebsraum 8 des Gehäuses 2 untergebracht ist.

Ein Antrieb der Teigwirkeinrichtung 14 erfolgt über mehrere, nämlich über drei Antriebsmotoren, die im Antriebsraum 8 des Gehäuses 2 untergebracht sind.

Von der Teigwirkeinrichtung 14 werden die dann rundgewirkten Teiglinge über ein Förderband 51 einer weiteren Bearbeitung, insbesondere einem Gärprozess und einem Backofen zugeführt.

Zum Reinigen der Teig-Bearbeitungskomponenten können diese durch Verlagerung bzw. Demontage von Einzelkomponenten in besonderer Weise zugänglich gemacht werden.

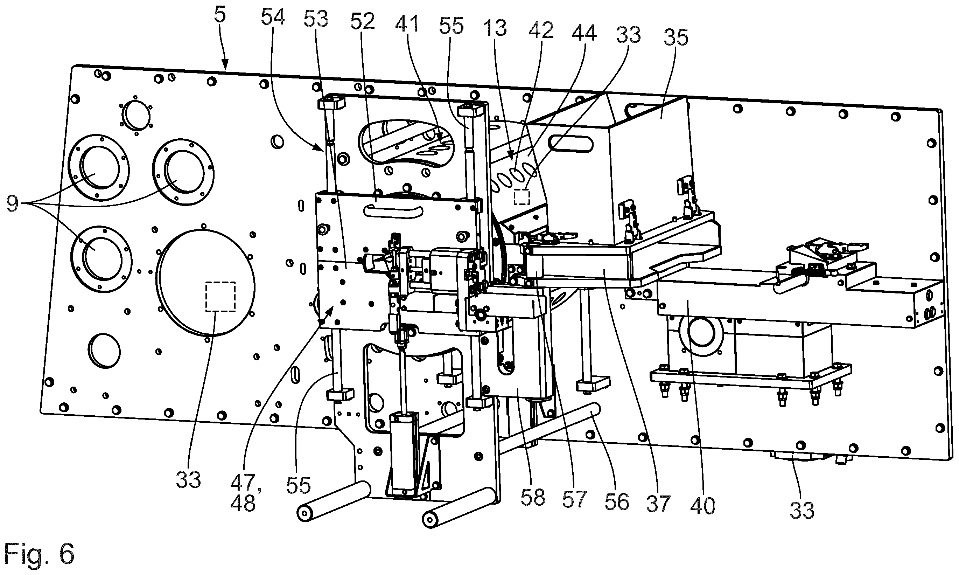

Dies wird nachfolgend insbesondere anhand der Fig. 6 bis 10 noch näher erläutert.

Fig. 6 zeigt die auch in der Fig. 5 dargestellte Baugruppe der Teigdosiereinrichtung 13 mit der Montageplatte 5, wobei der Teig-Zuführkolben 38 von der Linearführung 40 abgenommen ist. Die zugänglichen Flächen der Linearführung 40 sind glatt und einfach reinigbar.

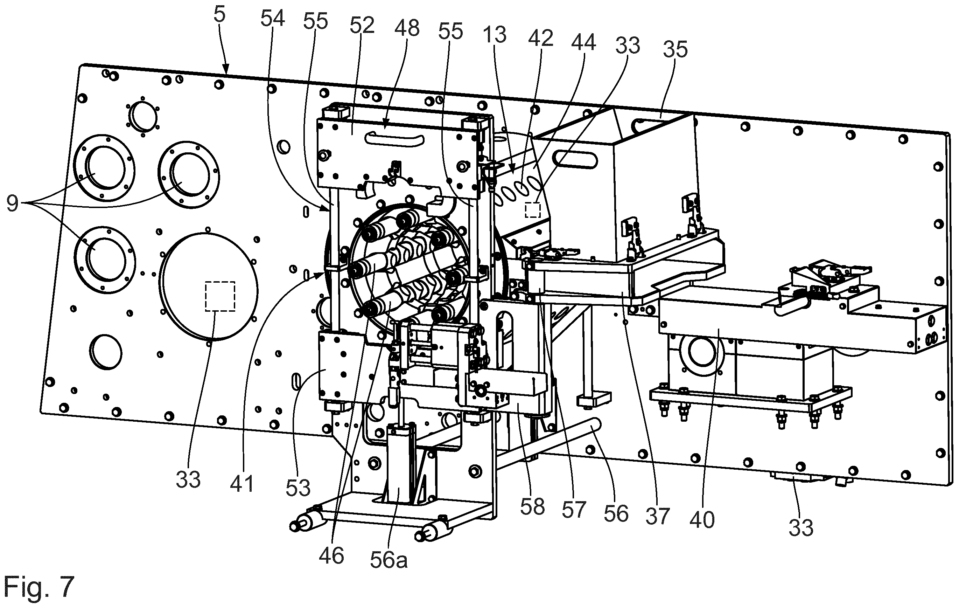

Fig. 7 zeigt die Baugruppe nach Fig. 6 nach Verlagerung der Kulissen-Tragplatte 48 von einer beispielsweise in den Fig. 5 und 6 gezeigten Betriebsstellung, in der die Kulissenabschnitte der Kulissen-Tragplatte 48 mit dem Messkolben 45 zumindest einer Messkolbenleiste 46 in Wirkverbindung stehen, in eine Reinigungsstellung. Die Kulissen-Tragplatte ist unterteilt in zwei Kulissen-Tragplattenabschnitte 52, 53. Eine vertikale Verlagerung dieser beiden Tragplattenabschnitte 52, 53 zwischen deren Betriebsstellung und deren Reinigungsstellung ist geführt über eine Linearführung 54 mit zwei vertikalen Führungsstangen 55, die fest über Auslegerstangen 56 an der Montageplatte 5 montiert sind.

In der Kulissenführungs-Reinigungsstellung der Kulissen-Tragplattenabschnitte 52, 53 können die Messkolbenleisten 46 und die Messkolben 45 aus der Messtrommel 41 entnommen werden.

Die Verlagerungsbewegung der Kulissentragplatte 48 zwischen der Betriebsstellung und der Reinigungsstellung kann motorisch angetrieben erfolgen, wobei der zugehörige Antriebsmotor dann wiederum im Antriebsraum 8 des Gehäuses 2 untergebracht ist. Alternativ kann eine solche Verlagerung auch manuell erfolgen. Bei der dargestellten Ausführung ist der untere Kulissen-Tragplattenabschnitt 53 über einen Antriebszylinder 56a verlagerbar. Der obere Kulissen-Tragplattenabschnitt 53 ist manuell verlagerbar.

Nach Entnahme der Messkolbenleisten 46 mit dem Messkolben 45 sind einerseits die Messkolbenleisten 46 mit den Messkolben 45 und andererseits ein Innenraum der Messtrommel 41 einer einfachen Reinigung zugänglich.

Die Ausgestaltung der Teigdosiereinrichtung 13 mit der zwischen der Betriebsstellung und der Reinigungsstellung verlagerbaren Kulissen-Tragplatte 48 kann derart sein, dass in der Kulissenführungs-Reinigungsstellung jeweils eine Messkolbenleiste 46 mit sämtlichen von dieser getragenen Messkolben 45 als Baueinheit aus der Messtrommel 41 entnehmbar ist.

Auch die Kulissen-Tragplatte 48 im Bereich der Montageplatte 5 kann entsprechend von einer Betriebsstellung in eine Reinigungsstellung verlagerbar sein. Diese Verlagerbarkeit ist dann motorisch über einen Motor angetrieben, der im Antriebsraum 8 untergebracht ist.

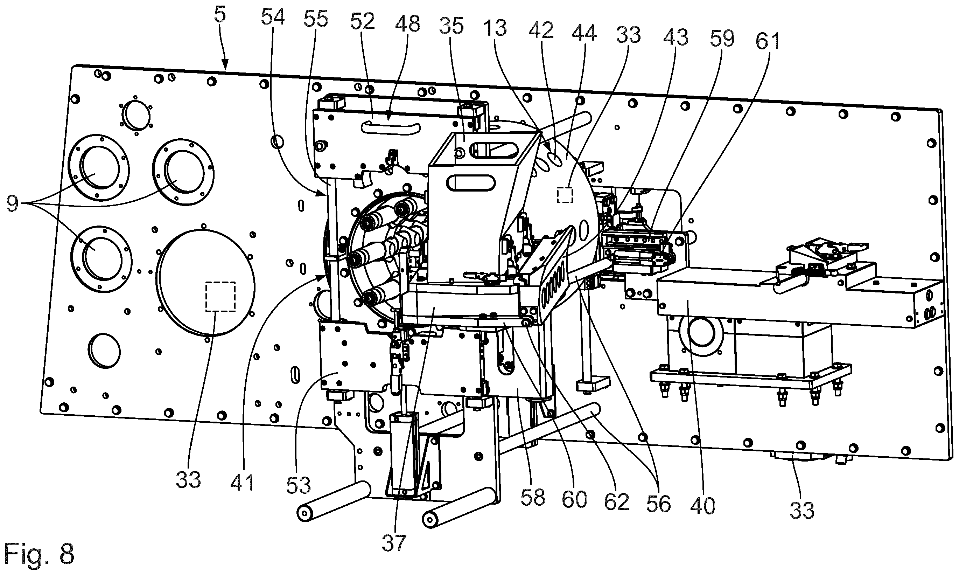

Fig. 8 zeigt die Teigkammer 37 einschließlich des Mundstücks 43 und des Einlauftrichters 35 aus der Betriebsstellung, die beispielsweise in der Fig. 5 gezeigt ist, verlagert in eine Reinigungsstellung. In dieser ist der Einlauftrichter 35 und eine in der Betriebstellung der Messtrommel 41 zugewandte Seite des Mundstücks 43 sowie eine der Montageplatte 5 zugewandte Seite der Teigkammer 37 der Reinigung zugänglich.

Geführt wird die Verlagerungsbewegung der Teigkammer 37 zwischen der Betriebsstellung beispielsweise nach Fig. 5, in der über die Teigkammer 37 der Teig mittels des Teig-Zuführkolbens 38 von dem Einlauftrichter 35 hin zur Messtrommel 41 gefördert wird, über ein Schwenklager 57 (vgl. Fig. 5) mit vertikaler Lagerachse. Das Schwenklager 57 ist getragen von einem Lagerbock 58, der wiederum über eine der Auslegerstangen 56 an der Montageplatte 5 montiert ist. Der Lagerbock 58 stellt eine Rahmenkomponente der Teigbearbeitungsmaschine 1 dar.

Zur justierten Positionierung der Teigkammer 37 in der Betriebsstellung dient eine Justageeinheit 59. Letztere ist als Nut/Federführung ausgeführt, wobei eine Nutkomponente der Justageeinheit 59 direkt auf der Grundplatte 5 montiert ist und mit einem Federvorsprung 60 der Teigkammer 37 zusammenwirkt. In der Betriebsstellung ist die Teigkammer 37 über einen Kraftspanner 61 gesichert, der über einen Kraftspannerantrieb angesteuert wird, der wiederum im Antriebsraum 8 des Gehäuses 2 untergebracht ist. Der Kraftspanner 61 ist direkt auf der Montageplatte 5 montiert.

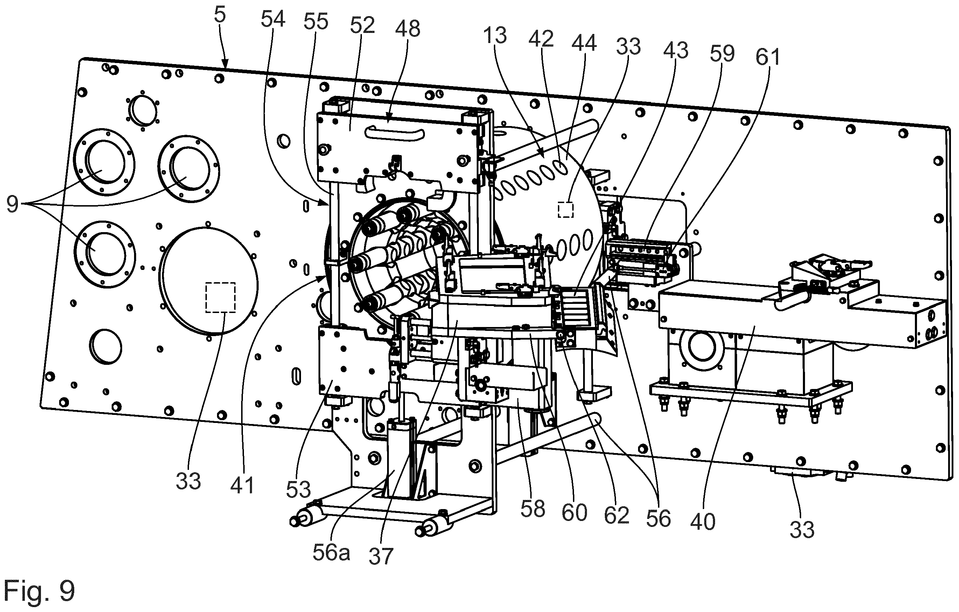

Fig. 9 zeigt eine weitere Stufe der Reinigungsstellung der Teigkammer 37, bei der das Mundstück 43 aus dessen Betriebsstellung in eine Reinigungsstellung verlagert ist, in der ein Inneres der Teigkammer 37 von außen her zugänglich ist. In der Reinigungsstellung ist auch das gesamte Mundstück 43 von allen Seiten her der Reinigung zugänglich.

Die Verlagerung des Mundstücks zwischen der Betriebsstellung und der Reinigungsstellung erfolgt geführt über ein Schwenklager 62 mit horizontaler Schwenkachse. Das Schwenklager 62 ist im Bereich einer Bodenplatte der Teigkammer 37 angeordnet. Ein kammerseitiger Lagerabschnitt des Schwenklagers 62 wirkt gleichzeitig als der Federvorsprung 60 für die Justageeinheit 59 zur Vorgabe der Betriebsstellung der Teigkammer 37.

In der Reinigungsstellung nach Fig. 9 ist der Einlauftrichter 35 von der Teigkammer 37 abgenommen.

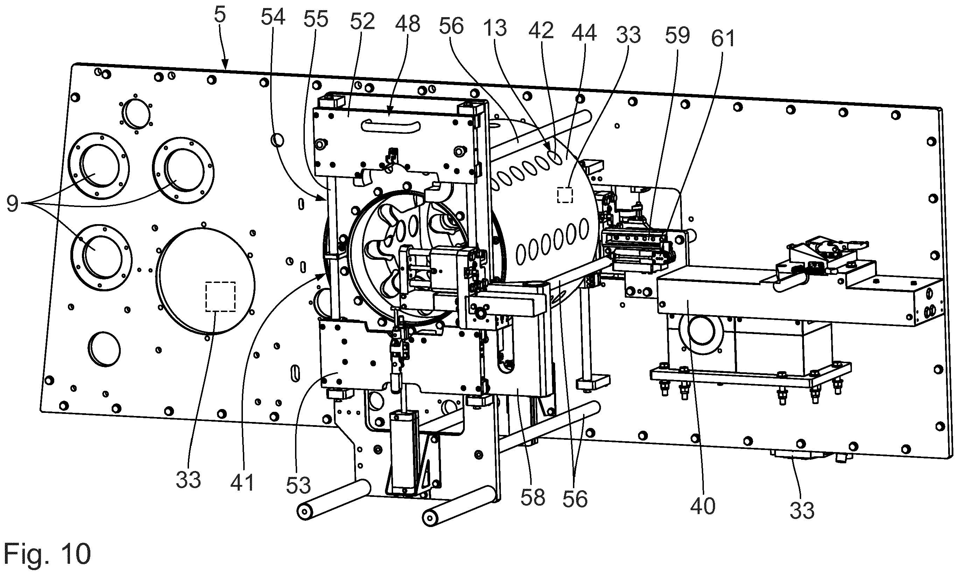

Fig. 10 zeigt die Teigdosiereinrichtung 13 nach Komplettdemontage der Teigkammer 37 vom Lagerbock 58 und nach Entfernung aller Messkolbenleisten 46 mit den Messkolben 45. Nun ist die gesamte Messtrommel 41 von außen und von innen her zu einer Grundreinigung zugänglich.
Bei einer solchen Grundreinigung der Teigbearbeitungsmaschine 1 kann folgendermaßen vorgegangen werden:
Zunächst wird eine äußere Gehäuseplatte des Gehäuses 2 abgenommen, so dass der Teig-Bearbeitungsraum 7 von außen her zugänglich ist. Diese äußere Gehäuseplatte kann als Schwenkhaube ausgeführt sein.

Anschließend wird zunächst der Teig-Zuführkolben 38 entfernt. Dann werden die Kulissen-Tragplattenabschnitte 52, 53 in die Reinigungsstellung überführt. Anschließend wird nach Lösen des Kraftspanners 61 die Teigkammer 37 einschließlich des Einlauftrichters 35 und des Mundstücks 43 in die Reinigungsstellung ausgeschwenkt und das Mundstück 43 in dessen Reinigungsstellung abgeklappt. Soweit erforderlich, wird die Teigkammer vom Lagerbock 58 gelöst.

Weiterhin werden die Messkolbenleisten 46 mit den Messkolben 45 aus der Messtrommel 41 entnommen.

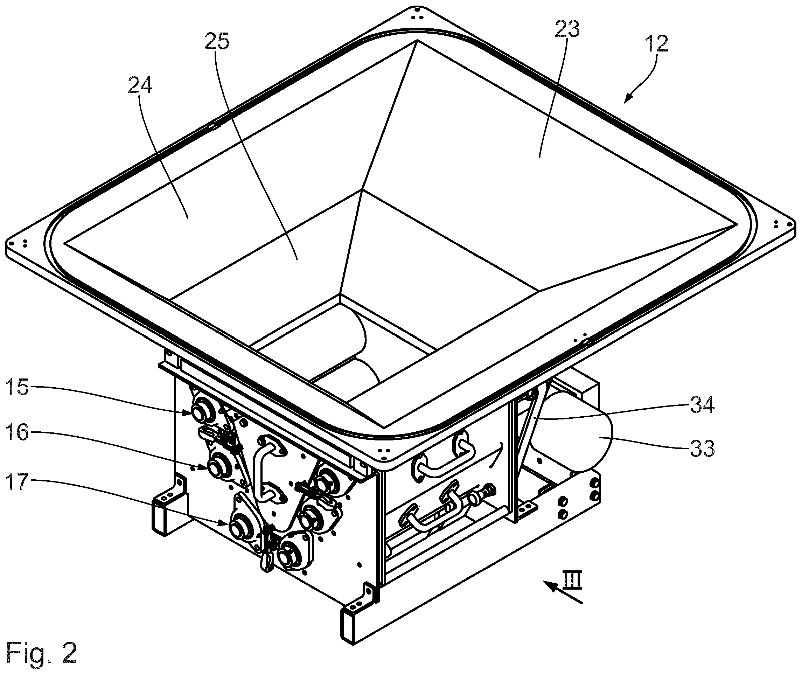

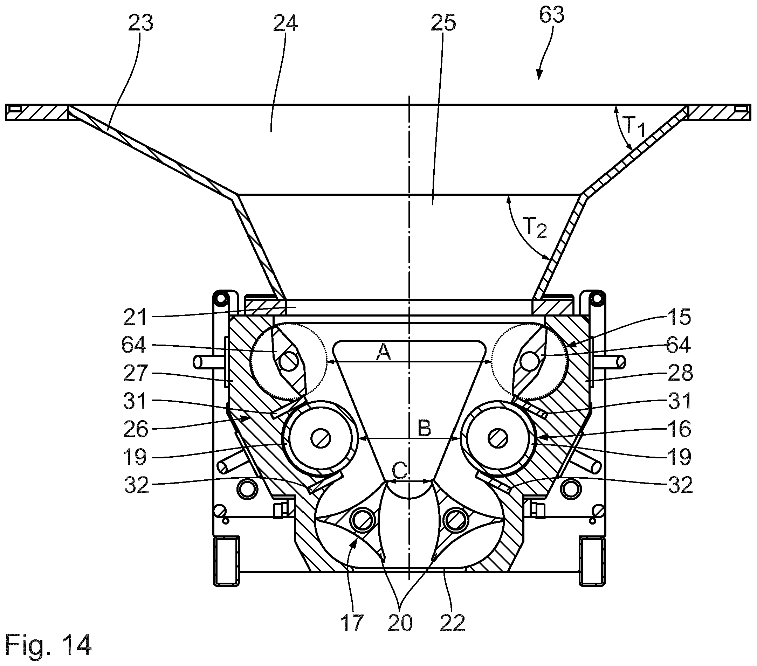

Fig. 14 zeigt eine weitere Variante einer Teigportioniereinrichtung 63, die anstelle der Teigportioniereinrichtung 12 bei der Teigbearbeitungsmaschine 1 zum Einsatz kommen kann. Komponenten, die denjenigen entsprechen, die vorstehend unter Bezugnahme insbesondere auf die Fig. 2 bis 4 bereits erläutert wurden, tragen die gleichen Bezugsziffern und werden nicht nochmals im Einzelnen diskutiert.

Anstelle runder Walzen 18 sind Walzen 64 des obersten Walzenpaars 15 als zweiflüglige Schaufelwalzen ausgeführt. Hierdurch kann ein hoher Teigdurchsatz der Teigportioniereinrichtung 63 erreicht werden.

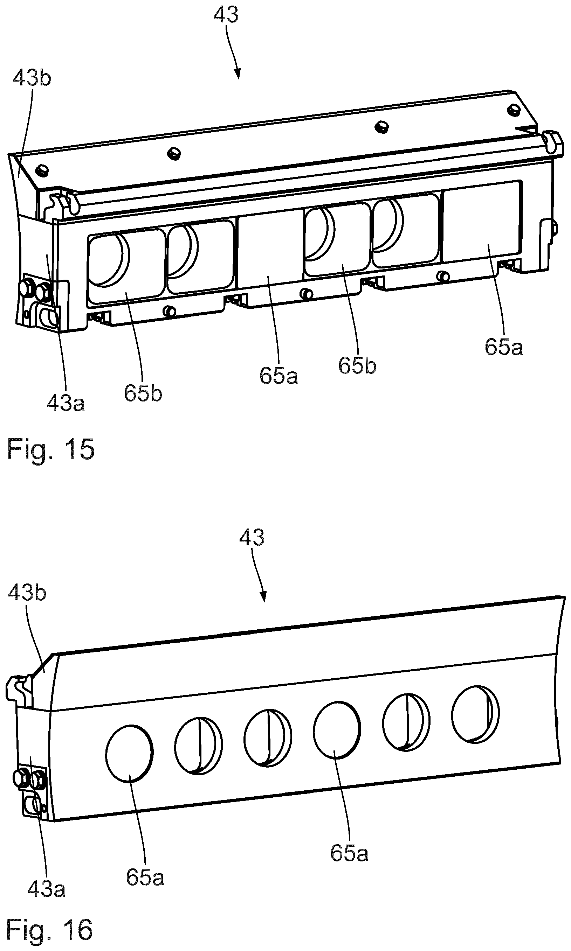

Die Figuren 15 und 16 zeigen eine Ausführung des Mundstücks 43, bei dem in dieses zwei Blockungskörper 65a eingesetzt sind. Die beiden Blockungskörper 65a blockieren die Teigdurchtrittskanäle einer in der Fig. 15 dritten Bearbeitungsreihe von links sowie einer in der Fig. 15 ganz rechten Bearbeitungsreihe der Teigdosiereinrichtung 13. Die Blockungskörper 65a sind so in entsprechende Aufnahmen 65b des Mundstücks 43 eingesetzt, dass die Blockungskörper 65a im Betrieb der Teigbearbeitungsmaschine 1 vom Teig in die zugehörigen Aufnahmen 65b gepresst werden.

Die Aufnahmen 65b sind nach dem Abklappen des Mundstücks 43 von der Teigkammer 37 von außen her durch die Bedienperson zum Einsetzen, Austauschen oder Entnehmen mindestens eines der Blockungskörper 65a einfach zugänglich.

Die Antriebe für die Teig-Bearbeitungskomponenten 12, 13 und 14 sind in der Fig. 5 bei 33 jeweils angedeutet.

Die Antriebe 33 sowie weitere steuerbare Komponenten, beispielsweise der Kraftspanner 61, werden über eine zentrale Steuereinrichtung 65 der Teigbearbeitungsmaschine 1 gesteuert, die in der Fig. 1 gestrichelt angedeutet ist. Die zentrale Steuereinrichtung 65 steht mit den anzusteuernden Komponenten in nicht dargestellter Weise in Signalverbindung.

## Patentansprüche

1. Teigbearbeitungsmaschine (1)
- mit einem Gehäuse (2)
- mit einer Teigdosiereinrichtung (13), die aufweist:
-- eine Teig-Zuführeinheit (35),
-- einen Teig-Zuführkolben (38),
-- eine Messtrommel (41) mit einer Mehrzahl von Messkammern (42),
-- eine Teigkammer (37), über die Teig von der Teig-Zuführeinheit (35) mittels des Teig-Zuführkolbens (38) hin zu den Messkammern (42) der Messtrommel (41) gefördert wird,
-- eine Mehrzahl von Messkolben (45), wobei jeweils einem der Messkolben (45) eine der Messkammern (42) zur Vorgabe eines Messkammervolumens zugeordnet ist, wobei jeweils mehrere der Messkolben (45) von jeweils einer Messkolbenleiste (46) getragen werden, die radial innerhalb der Messtrommel (41) angeordnet ist,
-- eine Kulissenführung (47) zur gesteuerten Verlagerung der Messkolben (45) zwischen
-- einer zurückgezogenen Messstellung, in der der Messkolben (45) das Messkolbenvolumen vorgibt,
-- einer ausgefahrenen Übergabestellung zur Übergabe des im Messkolbenvolumen dosierten Teigvolumens an eine nachgeordnete Teig-Bearbeitungskomponente (14),
- wobei die Kulissenführung (47) mindestens eine Kulissen-Tragplatte (48) aufweist, die zumindest abschnittsweise verlagerbar ist zwischen
-- einer Kulissenführungs-Betriebsstellung, in der mindestens eine Kulisse der Kulissen-Tragplatte (48) mit dem Messkolben (45) zumindest einer Messkolbenleiste (46) in Wirkverbindung steht,
-- einer Kulissenführungs-Reinigungsstellung, in der die Messkolbenleisten (46) aus der Messtrommel (41) entnommen werden können.

2. Teigbearbeitungsmaschine nach Anspruch 1, **dadurch gekennzeichnet, dass** die Kulisse der Kulissen-Tragplatte (48) in der Kulissenführungs-Betriebsstellung mit mindestens einer der Messkolbenleisten (46) zusammenwirkt.

3. Teigbearbeitungsmaschine nach Anspruch 1 oder 2, **gekennzeichnet durch** eine Ausgestaltung derart, dass in der Kulissen-Reinigungsstellung jeweils eine Messkolbenleiste (46) mit sämtlichen von dieser getragenen Messkolben (45) als Baueinheit aus der Messtrommel (41) entnehmbar ist.

4. Teigbearbeitungsmaschine nach einem der Ansprüche 1 bis 3, **dadurch gekennzeichnet, dass** die Kulissen-Tragplatte (48) in zwei Kulissen-Tragplattenabschnitte (52, 53) unterteilt ist.

5. Teigbearbeitungsmaschine nach einem der Ansprüche 1 bis 4, **gekennzeichnet durch** mindestens zwei Kulissen-Tragplatten (48), die axial beiderseits der Messtrommel (41) angeordnet sind.

6. Teigbearbeitungsmaschine nach Anspruch 5, **dadurch gekennzeichnet, dass** die beiden Kulissen-Tragplatten (48) jeweils zumindest abschnittsweise zwischen der Kulissenführungs-Betriebsstellung und der Kulissenführungs-Reinigungsstellung verlagerbar sind.

7. Teigbearbeitungsmaschine (1) nach einem der Ansprüche 1 bis 6, **gekennzeichnet durch**
- ein zwischen der Teigkammer (37) und der Messtrommel (41) angeordnetes Mundstück (43), über das in einer Betriebsstellung Teig von der Teigkammer (37) hin zu den Messkammern (42) der Messtrommel (41) gefördert wird,
- wobei das Mundstück (43) aus Kunststoff gefertigt ist.

8. Teigbearbeitungsmaschine nach Anspruch 7, **dadurch gekennzeichnet, dass** das Mundstück (43) aus PETP und/oder aus PTFE gefertigt ist.

9. Teigbearbeitungsmaschine nach Anspruch 7 oder 8, **dadurch gekennzeichnet, dass** das Mundstück (43) verlagerbar ist zwischen
- einer Betriebsstellung, in der über das Mundstück (43) Teig von der Teigkammer (37) hin zu den Messkammern (42) der Messtrommel (41) gefördert wird,
- einer Reinigungsstellung, in der ein Inneres der Teigkammer (37) von außen her zugänglich ist.

10. Teigbearbeitungsmaschine nach einem der Ansprüche 7 bis 9, **gekennzeichnet durch** eine Schwenklagerung (62) des Mundstücks (43) an der Teigkammer (37).

## Claims

1. Dough processing machine (1)
- with a housing (2),
- with a dough metering device (13) having
-- a dough feeding unit (35),
-- a dough feeding piston (38),
-- a measuring drum (41) with a plurality of measuring chambers (42),
-- a dough chamber (37) via which dough is conveyed, by means of the dough feeding piston (38), from the dough feeding unit (35) to the measuring chambers (42) of the measuring drum (41),
-- a plurality of measuring pistons (45), wherein one of the measuring chambers (42) is in each case associated to a respective one of the measuring pistons (45) to define a measuring chamber volume, wherein in each case a plurality of the measuring pistons (45) are carried by in each case one measuring piston bar (46) arranged radially inside the measuring drum (41),
- a slotted link guide (47) for the controlled displacement of the measuring pistons (45) between
-- a retracted measuring position in which the measuring piston (45) defines the measuring piston volume,
-- an extended transfer position to transfer the dough volume quantity metered in the measuring piston volume to a dough processing component (14) arranged downstream thereof,
- wherein the slotted link guide (47) has at least one slotted link carrier plate (48), which is displaceable at least partly between
-- a slotted link guide operating position in which at least one slotted link of the slotted link carrier plate (48) is operatively connected with the measuring piston (45) of at least one measuring piston bar (46),
-- a slotted link guide cleaning position in which the measuring piston bars (46) are removable from the measuring drum (41).

2. Dough processing machine as claimed in claim 1, **characterized in that** the slotted link of the slotted link carrier plate (48) interacts, in the slotted link guide operating position, with at least one of the measuring piston bars (46).

3. Dough processing machine as claimed in claim 1 or 2, **characterized by** a configuration such that in the slotted link guide cleaning position, in each case one measuring piston bar (46) is removable as a structural unit from the measuring drum (41) with all measuring pistons (45) carried by the same.

4. Dough processing machine as claimed in any one of claims 1 to 3, **characterized in that** the slotted link carrier plate (48) is subdivided into two slotted link carrier plate sections (52, 53).

5. Dough processing machine as claimed in any one of claims 1 to 4, **characterized by** at least two slotted link carrier plates (48) arranged axially on both sides of the measuring drum (41).

6. Dough processing machine (1) as claimed in claim 5, **characterized in that** the two slotted link carrier plates (48) are each displaceable at least partly between the slotted link guide operating position and the slotted link guide cleaning position.

7. Dough processing machine (1) as claimed in any one of claims 1 to 6, **characterized by**
- a mouthpiece (43) arranged between the dough chamber (37) and the measuring drum (41) in such a way that dough is conveyed, via said mouthpiece (43), from the dough chamber (37) to the measuring chambers (42) of the measuring drum (41) in an operating position,
- wherein the mouthpiece (43) is made of plastics.

8. Dough processing machine as claimed in claim 7, **characterized in that** the mouthpiece (43) is made of PETP and/or of PTFE.

9. Dough processing machine as claimed in claim 7 or 8, **characterized in that** the mouthpiece (43) is displaceable between
- an operating position in which dough is conveyed, via the mouthpiece (43), from the dough chamber (37) to the measuring chambers (42) of the measuring drum (41),
- a cleaning position in which an interior of the dough chamber (37) is accessible from outside.

10. Dough processing machine as claimed in any one of claims 7 to 9, **characterized by** a pivotable mounting (62) of the mouthpiece (43) to the dough chamber (37).

## Revendications

1. Machine de traitement de pâte (1)
- avec une caisse (2)
- avec un dispositif de dosage de pâte (13) présentant :
-- un dispositif d'alimentation de pâte (35),
-- un piston d'alimentation de pâte (38),
-- un tambour de dosage (41) avec une pluralité de chambres de dosage (42),
-- une chambre de pâte (37), à travers de laquelle de la pâte est transportée par le biais du piston d'alimentation de pâte (38) à partir du dispositif d'alimentation de pâte (35) vers les chambres de dosage (42) du tambour de dosage (41),
-- une pluralité de pistons de dosage (45), une des chambres de dosage (42) étant attribuée à un piston de dosage (45) chacun pour spécifier le volume de la chambre de dosage, plusieurs des pistons de dosage (45), respectivement, étant supportés par une barre pour piston de dosage (46) chacune qui est placée radialement à l'intérieur du tambour de dosage (41),
-- une guide à coulisse (47) pour déplacer le piston de dosage (45) de manière contrôlée entre
-- une position de dosage retirée, dans laquelle le piston de dosage (45) spécifie le volume du piston de dosage,
-- une position de transmission sortie pour transmettre le volume de pâte dosé dans le volume de piston de dosage à un composant de traitement de pâte (14) placé en aval,
- la guide à coulisse (47) présentant au moins une plaque de support pour coulisse (48) qui est au moins par sections déplaçable entre
-- une position de service de guide à coulisse, dans laquelle au moins une coulisse de la plaque de support pour coulisse (48) est en liaison active avec le piston de dosage (45) d'au moins une barre pour piston de dosage (46),
-- une position de nettoyage de guide à coulisse, dans laquelle les barres pour piston de dosage (46) peuvent être enlevées du tambour de dosage (41).

2. Machine de traitement de pâte selon la revendication 1, **caractérisée en ce que** la coulisse de la plaque de support pour coulisse (48) interagis avec au moins une des barres pour piston de dosage (46) dans la position de service de guide à coulisse.

3. Machine de traitement de pâte selon la revendication 1 ou 2, **caractérisée par** une configuration qui permet que dans la position de nettoyage de guide à coulisse, une barre pour piston de dosage (46), respectivement, avec tous pistons de dosage (45) supportés par celle-ci peut être enlevée comme unité modulaire du tambour de dosage (41).

4. Machine de traitement de pâte selon une des revendications 1 à 3, **caractérisée en ce que** la plaque de support pour coulisse (48) est subdivisée en deux sections de plaque de support pour coulisse (52, 53).

5. Machine de traitement de pâte selon une des revendications 1 à 4, **caractérisée par** au moins deux plaques de support pour coulisse (48) qui sont placées axialement de part et d'autre du tambour de dosage (41).

6. Machine de traitement de pâte selon la revendication 5, **caractérisée en ce que** les deux plaques de support pour coulisse (48), respectivement, sont au moins par sections déplaçable entre la position de service de guide à coulisse et la position de nettoyage de guide à coulisse.

7. Machine de traitement de pâte (1) selon une des revendications 1 à 6, **caractérisée par**
- un embout (43) placé entre la chambre de pâte (37) et le tambour de dosage (41), vers lequel de la pâte est transportée dans une position de service à partir de la chambre de pâte (37) vers les chambres de dosage (42) du tambour de dosage (41),
- l'embout (43) étant fabriqué en matière plastique.

8. Machine de traitement de pâte selon la revendication 7, **caractérisée en ce que** l'embout (43) et fabriqué en PETP et/ou en PTFE.

9. Machine de traitement de pâte selon la revendication 7 ou 8, **caractérisée en ce que** l'embout (43) est déplaçable entre
- une position de service, dans laquelle de la pâte est transportée à travers de l'embout à partir de la chambre de pâte (37) vers les chambres de dosage (42) du tambour de dosage (41),
- une position de nettoyage, dans laquelle un intérieur de la chambre de pâte (37) est accessible de l'extérieur.

10. Machine de traitement de pâte selon une des revendications 7 à 9, **caractérisée par** un support pivotant (62) de l'embout (43) sur la chambre de pâte (37).
